(19) Europäisches Patentamt / European Patent Office / Office européen des brevets

(11) **EP 1 489 907 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(21) Anmeldenummer: **03718682.2**

(22) Anmeldetag: **10.03.2003**

(51) Int Cl.:
**A01N 43/707** (2006.01)  **A01N 41/10** (2006.01)

(86) Internationale Anmeldenummer:
**PCT/EP2003/002416**

(87) Internationale Veröffentlichungsnummer:
**WO 2003/079789 (02.10.2003 Gazette 2003/40)**

(54) **SELEKTIVE HERBIZIDE AUF BASIS VON SUBSTITUIERTEN AMINOTRIAZINONEN UND SUBSTITUIERTEN BENZOYLCYCLOHEXANDIONEN**

SELECTIVE HERBICIDES BASED ON SUBSTITUTED AMINOTRIAZINONES AND SUBSTITUTED BENZOYLCYCLOHEXANDIONES

HERBICIDES SELECTIFS A BASE D'AMINOTRIAZINONES SUBSTITUES ET DE BENZOYLCYCLOHEXANEDIONES SUBSTITUES

(84) Benannte Vertragsstaaten:
**AT BE BG CH CY CZ DE DK EE ES FI FR GB GR HU IE IT LI LU MC NL PT RO SE SI SK TR**

(30) Priorität: **22.03.2002 DE 10212887**

(43) Veröffentlichungstag der Anmeldung:
**29.12.2004 Patentblatt 2004/53**

(73) Patentinhaber: **Bayer CropScience Aktiengesellschaft**
**40789 Monheim (DE)**

(72) Erfinder:
• **FEUCHT, Dieter**
**40789 Monheim (DE)**
• **DAHMEN, Peter**
**41470 Neuss (DE)**
• **MEYER, Joachim**
**51377 Leverkusen (DE)**
• **FANICA, Olivier**
**F-77690 Montigny-sur-Loing (FR)**

(74) Vertreter: **Schwenk, Norbert**
**Bayer CropScience AG**
**Patent- und Lizenzabteilung**
**Industriepark Hoechst, Gebäude K 607**
**65926 Frankfurt am Main (DE)**

(56) Entgegenhaltungen:
WO-A-02/21920    WO-A-02/100173
WO-A-03/005820    WO-A-03/028450

**Beschreibung**

Die Erfindung betrifft eine neue herbizide, synergistische Wirkstoffkombination, die Metribuzin und Sulcotrione als einzig herbizid wirksame Bestandteile enthält.

Bestimmte substituierte Aminotriazinone, wie z.B. die Verbindungen 4-Amino-6-(1,1-dimethyl-ethyl)-3-methylthio-1,2,4-triazin-5(4H)-on (Metribuzin), 4-Amino-3-methyl-6-phenyl-1,2,4-triazin-5(4H)-on (Metamitron) und 4-Amino-6-(1,1-dimethylethyl)-3-ethylthio-1,2,4-triazin-5(4H)-on (Ethiozin), sind als herbizid wirksame Stoffe bekannt (vgl. DE-1795784, DE-2138031, US-4036632).

Bestimmte substituierte Benzoylcyclohexandione, wie z.B. die Verbindungen 2-(2-Chlor-4-methylsulfonyl-benzoyl)-1,3-cyclohexandion (Sulcotrione) und 2-(4-Methylsulfonyl-2-nitro-benzoyl)-1,3-cyclohexandion (Mesotrione), sind ebenfalls als herbizid wirksame Stoffe bekannt (vgl. EP-0137963 und WO-96/13163).

Die Wirkstoffkombination von Mesotrione und Metribuzin wird in WO 02/21920 A beschrieben; und in WO 02/100173 A und WO 03/005820 A wurden bereits Mischungen vorgeschlagen, die Mesotrione und Triazinone, insbesondere Metribuzin bzw. Metamitron enthalten.

Überraschenderweise wurde nun gefunden, dass die Kombination aus Sulcotrion und Metribuzin einen synergistischen Effekt hinsichtlich der Wirkung gegen Unkräuter zeigt und besonders vorteilhaft als breit wirksame Kombinationspräparate zur selektiven Bekämpfung von Unkräutern in Nutzpflanzenkulturen, wie z.B. in Baumwolle, Gerste, Kartoffeln, Mais, Raps, Reis, Roggen, Soja, Sonnenblumen, Weizen, Zuckerrohr und Zuckerrüben, verwendet werden kann.

Gegenstand der Erfindung sind selektiv-herbizide Mittel, gekennzeichnet durch einen wirksamen Gehalt an einer Wirkstoffkombination enthaltend als einzig herbizid wirksame Bestandteile

  (a) 4-Amino-6-(1,1-dimethyl-ethyl)-3-methylthio-1,2,4-triazin-5(4H)-on (Metribuzin)
  ("Wirkstoffe der Gruppe 1")

  und

  (b) 2-(2-Chlor-4-methylsulfonyl-benzoyl)-1,3-cyclohexandion (Sulcotrione) ("Wirkstoffe der Gruppe 2").

Im Allgemeinen entfällt auf 1 Gewichtsteil eines Wirkstoffs der Gruppe 1 0,01 bis 100 Gewichtsteile eines Wirkstoffs der Gruppe 2.

Es wurde nun überraschend gefunden, dass die vorstehend definierten Wirkstoffkombinationen aus Metribuzin und Sulcotrione bei sehr guter Nutzpflanzen-Verträglichkeit eine besonders hohe herbizide Wirksamkeit aufweisen und in verschiedenen Kulturen, vor allem in Baumwolle, Gerste, Kartoffeln, Mais, Raps, Reis, Roggen, Soja, Sonnenblumen, Weizen, Zuckerrohr und Zuckerrüben, insbesondere in Gerste, Mais, Reis und Weizen, ganz besonders in Mais, zur selektiven Bekämpfung von monokotylen und dikotylen Unkräutern verwendet werden können.

Überraschenderweise ist die herbizide Wirksamkeit der erfindungsgemäßen Wirkstoffkombination erheblich höher als die Summe der Wirkungen der einzelnen Wirkstoffe.

Es liegt somit ein nicht vorhersehbarer synergistischer Effekt vor und nicht nur eine Wirkungsergänzung. Die neue Wirkstoffkombination ist in vielen Kulturen gut verträglich, wobei die neue Wirkstoffkombination auch sonst schwer bekämpfbare Unkräuter gut bekämpft. Die neue Wirkstoffkombination stellt somit eine wertvolle Bereicherung der Herbizide dar.

Der synergistische Effekt der erfindungsgemäßen Wirkstoffkombination ist bei bestimmten Konzentrationsverhältnissen besonders stark ausgeprägt. Jedoch können die Gewichtsverhältnisse der Wirkstoffe in der Wirkstoffkombination in relativ großen Bereichen variiert werden. Im Allgemeinen entfallen auf 1 Gewichtsteil Wirkstoff der Gruppe 1 0,01 bis 100 Gewichtsteile, vorzugsweise 0,02 bis 50 Gewichtsteile und besonders bevorzugt 0,05 bis 10 Gewichtsteile Wirkstoff der Gruppe 2.

Erfindungsgemäß können alle Pflanzen und Pflanzenteile behandelt werden. Unter Pflanzen werden hierbei alle Pflanzen und Pflanzenpopulationen verstanden, wie er wünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel I bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen.

Besonders hervorgehoben sei die Pflanzenbehandlung mit den im vorliegenden Text speziell aufgeführten Verbindungen bzw. Mischungen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. ALS-, 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombination ist jedoch keineswegs auf diese Gattungen beschränkt, sondern erstreckt sich in gleicher Weise auch auf andere Pflanzen.

Die erfindungsgemäß zu verwendende Wirkstoffkombination kann sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner ist sie für den Einsatz auf Bracheflächen geeignet. Weitere Einsatzgebiete sind Baumschulen, Forst, Grünland und Zierpflanzenbau.

Die Wirkstoffkombination kann in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit; Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren; wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen, vorzugsweise zwischen 0,5 und 90 %.

Die erfindungsgemäße Wirkstoffkombination wird im Allgemeinen in Form von Fertigformulierungen zur Anwendung gebracht. Die in der Wirkstoffkombination enthaltenen Wirkstoffe können aber auch in Einzelformulierungen bei der Anwendung gemischt, d.h. in Form von Tankmischungen zur Anwendung gebracht werden.

Die neue Wirkstoffkombination kann als solche oder in ihren Formulierungen, wobei wiederum Fertigformulierungen oder Tankmischungen möglich sind, auch in Mischungen mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln Verwendung finden. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfat oder Ammoniumrhodanid aufzunehmen.

Die neue Wirkstoffkombination kann als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäße Wirkstoffkombination kann vor und nach dem Auflaufen der Pflanzen appliziert werden, also im Vorauflauf und Nachauflauf-Verfahren. Sie kann auch vor der Saat in den Boden eingearbeitet werden.

Die gute herbizide Wirkung der neuen Wirkstoffkombination geht aus den nachfolgenden Beispielen hervor. Während die einzelnen Wirkstoffe in der herbiziden Wirkung Schwächen aufweisen, zeigt die Kombination durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):
Wenn

X = % Schädigung durch Herbizid A (Wirkstoff der Gruppe 1) bei p kg/ha Aufwandmenge
und

Y = % Schädigung durch Herbizid B (Wirkstoff der Gruppe 2) bei q kg/ha Aufwandmenge
und

E = die erwartete Schädigung der Herbizide A und B bei p und q kg/ha Aufwandmenge,
dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die zu erwartende Wirkung für eine gegebene Kombination dreier Herbizide kann ebenfalls der oben angegebenen Literatur entnommen werden.

Anwendungsbeispiele:

Die notwendige Menge an Wirkstoff - bzw. Formulierung - wird in 2 bis 3 ml des Lösungsmittels (Aceton oder N,N-Dimethyl-formamid) gelöst, gegebenenfalls mit einem Emulgator (1 ml) versetzt und mit Wasser auf die gewünschte Konzentration verdünnt.

Mischungen werden dadurch hergestellt, dass eine vorgegebene, gelöste Menge des ersten Wirkstoffs mit der notwendigen Menge des zweiten Wirkstoffs - und gegebenenfalls mit zusätzlichen Wirkstoffen oder anderen Inhaltsstoffen - vermischt und danach mit Wasser auf die gewünschte Konzentration verdünnt wird.

Bei Post-emergence Versuchen wird normalerweise der Sprühlösung eine oberflächenaktive Verbindung (z.B. Renex 36) in einer Konzentration von 0,1 % zugesetzt.

Die Menge an Wirkstoff wird so gewählt, dass die gewünschte Aufwandmenge pro Hektar (ha) erreicht wird.

**Beispiel A**

Post-emergence-Test (Gewächshaus)

Testpflanzen werden unter kontrollierten Bedingungen (Temperatur und Licht) herangezogen. Sobald die Pflanzen eine Wuchshöhe von 5 bis 15 cm erreicht haben, wird die Testverbindung bzw. die Kombination von Testverbindungen in der Weise aufgespritzt, dass die jeweils gewünschten Wirkstoffmengen pro Flächeneinheit ausgebracht werden. Die Konzentration der Spritzbrühe wird so gewählt, dass in 500 Liter Wasser pro Hektar die jeweils gewünschten Wirkstoffmengen ausgebracht werden.

Nach der Spritzanwendung werden die Pflanzgefäße im Gewächshaus bei konstanten Licht- und Temperaturbedingungen untergebracht.

Nach ca. drei Wochen wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)
100 % = totale Vernichtung

Wirkstoffe, Aufwandmengen, Testpflanzen und Resultate gehen aus den nachfolgenden Tabellen hervor, wobei die in den Tabellen verwendeten Bezeichnungen die folgende Bedeutung haben:

a.i. = active ingredient (Wirkstoff)
ha = Hektar

Metribuzin steht in der Tabelle für eine 70 WG Formulierung des entsprechenden Wirkstoffs ("Sencor 70 WG").

Sulcotrione steht in der Tabelle für eine 300 SC Formulierung des entsprechenden Wirkstoffs ("Mikado 300 SC").

**Tabelle A1**

| Wirkstoff (Formulierung) | Aufwandmenge (g ai/ha) | Chenopodium album beobachtet | Chenopodium album errechnet* |
|---|---|---|---|
| Metribuzin | 10 | 0 | |
| Sulcotrione | 20 | 90 | |
| Metribuzin +Sulcotrione | 10+20 | 100 | 90 |

**Tabelle A2**

| Wirkstoff (Formulierung) | Aufwandmenge (g ai/ha) | Polygonum convolvolus beobachtet | Polygonum convolvoluse errechnet* |
|---|---|---|---|
| Metribuzin | 40 | 0 | |
| | 20 | 0 | |
| Sulcotrione | 80 | 60 | |
| | 40 | 30 | |
| | 20 | 0 | |
| Metribuzin +Sulcotrione | 40+80 | 100 | 60 |
| | 40+40 | 90 | 30 |
| | 40+20 | 60 | 0 |
| | 20+80 | 100 | 60 |
| | 20+40 | 80 | 30 |
| | 20+20 | 60 | 0 |

**Tabelle A3**

| Wirkstoff (Formulierung) | Aufwandmenge (g ai/ha) | Amaranthus retroflexus beobachtet | Amaranthus retroflexus errechnet* |
|---|---|---|---|
| Metribuzin | 20 | 90 | |
| | 10 | 80 | |

(fortgesetzt)

| Wirkstoff (Formulierung) | Aufwandmenge (g ai/ha) | Amaranthus retroflexus beobachtet | Amaranthus retroflexus errechnet* |
|---|---|---|---|
| Sulcotrione | 80 | 60 | |
| | 40 | 20 | |
| Metribuzin +Sulcotrione | 20+80 | 100 | 96 |
| | 20+40 | 100 | 92 |
| | 10+80 | 100 | 92 |
| | 10+40 | 100 | 84 |

(500 ml/ha Marlipal wurden als Additiv zugesetzt)

**Tabelle A4**

| Wirkstoff (Formulierung) | Aufwandmenge (g ai/ha) | Polygonum convolvolus beobachtet | Polygonum convolvolus errechnet* |
|---|---|---|---|
| Metribuzin | 40 | 0 | |
| | 20 | 0 | |
| Sulcotrione | 80 | 70 | |
| | 40 | 20 | |
| Metribuzin +Sulcotrione | 40+80 | 100 | 70 |
| | 40+40 | 70 | 20 |
| | 20+80 | 95 | 70 |
| | 20+40 | 70 | 20 |

(500 ml/ha Marlipal wurden als Additiv zugesetzt)

**Tabelle A5**

| Wirkstoff (Formulierung) | Aufwand menge (g ai/ha) | Echinochloa crus galli beobachtet | Echinochloa crus galli errechnet* |
|---|---|---|---|
| Metribuzin | 40 | 10 | |
| | 20 | 0 | |
| | 10 | 0 | |
| Sulcotrione | 80 | 80 | |
| | 40 | 40 | |
| | 20 | 20 | |
| Metribuzin +Sulcotrione | 40+80 | 100 | 82 |
| | 40+40 | 100 | 46 |
| | 40+20 | 95 | 28 |
| | 20+80 | 100 | 80 |
| | 20+40 | 90 | 40 |
| | 20+20 | 60 | 20 |
| | 10+80 | 95 | 80 |
| (500 ml/ha Marlipal wurden als Additiv zugesetzt) * Die errechneten Werte wurden mit Hilfe der Colby-Formel ermittelt. | | | |

**Patentansprüche**

**1.** Herbizide Mittel, **gekennzeichnet durch** einen wirksamen Gehalt an einer Wirkstoffkombination enthaltend als einzig herbizid wirksame Bestandteile

(a) 4-Amino-6-(1,1-dimethyl-ethyl)-3-mefhylthio-1,2,4-tnazin-5(4H)-on (Metribuzin)
(Wirkstoff der Gruppe 1")
und
(b) 2-(2-Chlor-4-methylsulfonyl-benzoyl)-1,3-cyclohexandion (Sulcotrione) ("Wirkstoff der Gruppe 2"),

2. Verwendung eines Mittels gemäß Anspruch 1 zur Bekämpfung von unerwünschten Pflanzen.

3. Verfahren zur Bekämpfung von unerwünschten Pflanzen, **dadurch gekennzeichnet, dass** man Mittel gemäß Anspruch 1 auf die unerwünschte Pflanzen und/oder ihren Lebensraum einwirken lässt.

4. Verfahren zur Herstellung eines herbiziden Mittels, **dadurch gekennzeichnet, dass** man ein Mittel gemäß Anspruch 1 mit oberflächenaktiven Mitteln und/oder Streckmitteln vermischt.

5. Mittel gemäß Anspruch 1, **dadurch gekennzeichnet**, das auf 1 Gewichtsteil des Wirkstoffes der Gruppe 1 0,01 bis 100 Gewichtsteile des Wirkstoffes der Gruppe 2 entfallen.

**Claims**

1. Herbicidal compositions, **characterized in that** they comprise an effective amount of an active compound combination containing as the only herbicidally active constituents

(a) 4-amino-6-(1,1-dimethylethyl)-3-methylthio-1,2,4-triazin-5(4H)-one (metribuzin)
("active compound of group 1")
and
(b) 2-(2-chloro-4-methylsulphonylbenzoyl)-1,3-cyclohexanedione (sulcotrione)
("active compound of group 2").

2. Use of a composition according to Claim 1 for controlling unwanted plants.

3. Method for controlling unwanted plants, **characterized in that** compositions according to Claim 1 are allowed to act on the unwanted plants and/or their habitat.

4. Process for preparing a herbicidal composition, **characterized in that** a composition according to Claim 1 is mixed with surfactants and/or extenders.

5. Compositions according to Claim 1, **characterized in that** from 0.01 to 100 parts by weight of active compound of group 2 are present per part by weight of active compound of group 1.

**Revendications**

1. Agents herbicides **caractérisés par** une teneur efficace en une combinaison de principes actifs contenant comme seuls constituants herbicides actifs

(a) la 4-amino-6-(1,1-diméthyl-éthyl)-3-méthylthio-1,2,4-triazine-5(4H)-one (métribuzine)
("principe actif du groupe I")
et
(b) la 2-(2-chloro-4-méthylsulfonyl-benzoyl)-1,3-cyclohexanedione (sulcotrione)
("principe actif du groupe II")

2. Utilisation d'un agent selon la revendication 1 pour combattre des plantes indésirables.

3. Procédé pour combattre des plantes indésirables, **caractérisé en ce que** l'on laisse agir un agent selon la revendication 1 sur les plantes indésirables et/ou sur leur biotope.

**4.** Procédé pour la préparation d'un agent herbicide, **caractérisé en ce que** l'on mélange un agent selon la revendication 1 avec des agents tensioactifs et/ou des diluants.

**5.** Agents selon la revendication 1, **caractérisés en ce que** pour une partie en poids du principe actif du groupe I on compte de 0,01 à 100 parties en poids du principe actif du groupe II.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1795784
- DE 2138031
- US 4036632 A
- EP 0137963 A
- WO 9613163 A
- WO 0221920 A
- WO 02100173 A
- WO 03005820 A

**In der Beschreibung aufgeführte Nicht-Patentliteratur**

- **COLBY, S.R.** Calculating synergistic and antagonistic responses of herbicide combinations. *Weeds,* 1967, vol. 15, 20-22